(19) Europäisches Patentamt
European Patent Office
Office européen des brevets

(11) EP 2 209 183 B1

(12) **EUROPEAN PATENT SPECIFICATION**

(45) Date of publication and mention
of the grant of the patent:
**10.10.2012 Bulletin 2012/41**

(21) Application number: **08846624.8**

(22) Date of filing: **04.11.2008**

(51) Int Cl.:
**H02K 1/02** $^{(2006.01)}$          **H01F 7/02** $^{(2006.01)}$

(86) International application number:
**PCT/JP2008/070046**

(87) International publication number:
**WO 2009/060831 (14.05.2009 Gazette 2009/20)**

(54) **MOTOR PERMANENT-MAGNET**

PERMANENTMAGNET FÜR MOTOR

AIMANT PERMANENT POUR MOTEUR

(84) Designated Contracting States:
**AT BE BG CH CY CZ DE DK EE ES FI FR GB GR
HR HU IE IS IT LI LT LU LV MC MT NL NO PL PT
RO SE SI SK TR**

(30) Priority: **06.11.2007   JP 2007288015**

(43) Date of publication of application:
**21.07.2010   Bulletin 2010/29**

(73) Proprietor: **Honda Motor Co., Ltd.
Minato-ku
Tokyo 107-8556 (JP)**

(72) Inventors:
• **SHINTANI, Yasutaka
Wako-shi
Saitama 351-0193 (JP)**

• **KOMATSU, Toshiyasu
Wako-shi
Saitama 351-0193 (JP)**

(74) Representative: **Herzog, Markus et al
Weickmann & Weickmann
Patentanwälte
Postfach 86 08 20
81635 München (DE)**

(56) References cited:
**GB-A- 574 033          JP-A- 2000 324 736
JP-A- 2002 064 010     JP-A- 2005 272 714**

**Description**

TECHNICAL FIELD

The present invention relates to a motor permanent-magnet.

BACKGROUND ART

Recently, rare earth magnets such as neodymium magnets, having a superior magnetic properties although more expensive than ferrite magnets, are widely used for motor permanent-magnets. On the other hand, metallic magnets, which are represented by the rare earth magnets, have a problem of increase in an eddy current loss when AC magnetic field of a high frequency is applied to the metallic magnets because the metallic magnets have lower electric resistances than the ferrite magnets.
The preamble of the claim is based on GB 574033 A, which discloses a magnet to be used in a motor provided with a coating which includes iron filings or other magnetic material in a finely divided state admixed with a varnish or other adhesive. But there, the content rate of the magnetic powder is not disclosed.
Conventionally, a rare earth magnet containing a high electric resistive material to decrease the eddy current loss is proposed (see, for example, in JP 2002-64010A) The rare earth magnet is produced through formation of a powder mixture of powder material of a Nd-Fe-B alloy and a powder of $B_2O_3$ in a magnetic field, and then subjected to a sintering process, and a heat treatment.
In the rare earth magnet, combined boron oxide with a high electric resistance produced by reducing $B_2O_3$ with the Nd-Fe-B alloy in the sintering process increases an electric resistance of the Nd-Fe-B alloy. As a result, the rare earth magnet can decrease the eddy current loss and thus can prevent an efficiency of a motor from decreasing and magnetic properties from degrading (thermal demagnetization) due to heat generation.

DISCLOSURE OF THE INVENTION

[PROBLEMS TO BE RESOLVED BY THE INVENTION]

However the conventional rare earth magnet mentioned above has a problem of degradation in a magnetic property due to decrease in ratio of the magnetic phase formed in the rare earth magnet because the rare earth magnet is produced by mixing an oxide powder ($B_2O_3$ powder) with an a material powder of the Nd-Fe-B alloy as mentioned above.
An object of the present invention is to provide a motor permanent-magnet capable of preventing a magnetic property from degrading and efficiently suppressing generation of eddy currents.

[MEASURES FOR RESOLVING THE PROBLEMS]

To solve the problem of the present invention provides a motor permanent magnet in accordance with claim 1. The motor-permanent magnet includes a coating film in a surface thereof, the coating film including magnetic phases dispersed in an electrical nonconductive matrix. The motor permanent-magnet has the coating film near a surface of the magnet where an eddy current tends to flow with a greater magnitude by a conductor skin effect, so that the eddy current is cut off by the electrically nonconductive matrix and dispersed by magnetic phases and the dispersed small eddy currents flow in respective magnetic phases. In other words, in the motor permanent-magnet, the coating film suppresses a magnitude of the eddy current, which originally become greater near the surface, to make the eddy currents small.
Further, unlike a conventional motor permanent magnet (for example, combined boron oxide) including a high resistive material dispersed up to inside thereof, the motor permanent-magnet according to the present invention does not include such a high resistive material inside thereof where the eddy current in magnitude is originally small. This prevents a ratio of the magnetic phase therein from decreasing and thus prevents the magnetic properties from being degraded.
In the motor permanent-magnet, a content rate of the magnetic powder forming the magnetic phase in the coating film is equal to or greater than 12.5% and equal to or smaller than 36.6% in area ratio.
In the motor permanent-magnet, a thickness of the coating film is preferably equal to or greater than 50 $\mu$m.

[ADVANTAGEOUS EFFECT OF THE INVENTION]

According to a motor permanent-magnet of the present invention can prevent the magnetic property from degrading as well as efficiently suppress generation of eddy currents.

## BRIEF DESCRIPTION OF DRAWINGS

Fig. 1A is an exploded perspective view of an electric motor including motor permanent-magnets according to an embodiment;

Fig. 1B is a partial cross section view, taken along line A-A, of the motor permanent magnet shown in Fig. 1A;

Fig. 2A is a perspective view of the motor permanent-magnet according to the embodiment to schematically show a state where an eddy current is generated in the motor permanent-magnet by an AC magnetic field of the motor and a direction of a magnetic flux density caused by the AC magnetic field is from a stator side to a rotor side;

Fig. 2B is a partial enlarged cross section view of the motor permanent-magnet according to a comparative example to show a state where eddy currents are generated;

Fig. 2C is a partial enlarged cross section view of the motor permanent-magnet according to the embodiment to show a state where eddy currents are generated;

Fig. 3 is an illustration of a unit for measuring an exothermic temperature of the magnet;

Fig. 4 is a chart showing variation in the exothermic temperature of the magnet of a first example according to the present invention, an axis of abscissa representing measuring time [min] and an axis of coordinate representing the exothermic temperature [°C] of permanent magnet;

Fig. 5 is a chart showing an energy loss decrease quantity $\Delta Pc$ of the magnets, an axis abscissa representing kind of magnetic powders, an axis of coordinate representing an energy loss decrease quantity $\Delta Pc$;

Fig. 6 is a chart showing a relation between a content rate of the magnetic powder and the energy loss decrease quantity $\Delta Pc$ of compositions forming the coating film, an axis of abscissa representing the content rate of the magnetic powder [mass %], an axis of coordinate representing the energy loss decrease quantity $\Delta Pc$ [W]; and

Fig. 7 is a chart showing a relation between a thickness and the energy loss decrease quantity $\Delta Pc$ [W] of the coating film, an axis of abscissa representing a thickness of films and an axis of coordinate representing the energy loss decrease quantity $\Delta Pc$ [W].

[Description of Reference Numerals]

1      MOTOR PERMANENT-MAGNET
10     MOTOR
11     MAGNET MATRIX
12     COATING FILM
13     ELECTRICAL NONCONDUCTIVE MATRIX
14     MAGNETIC PHASE

## BEST MODE FOR CARRYING OUT THE INVENTION

Next with reference to drawings will be described an embodiment of the present invention.

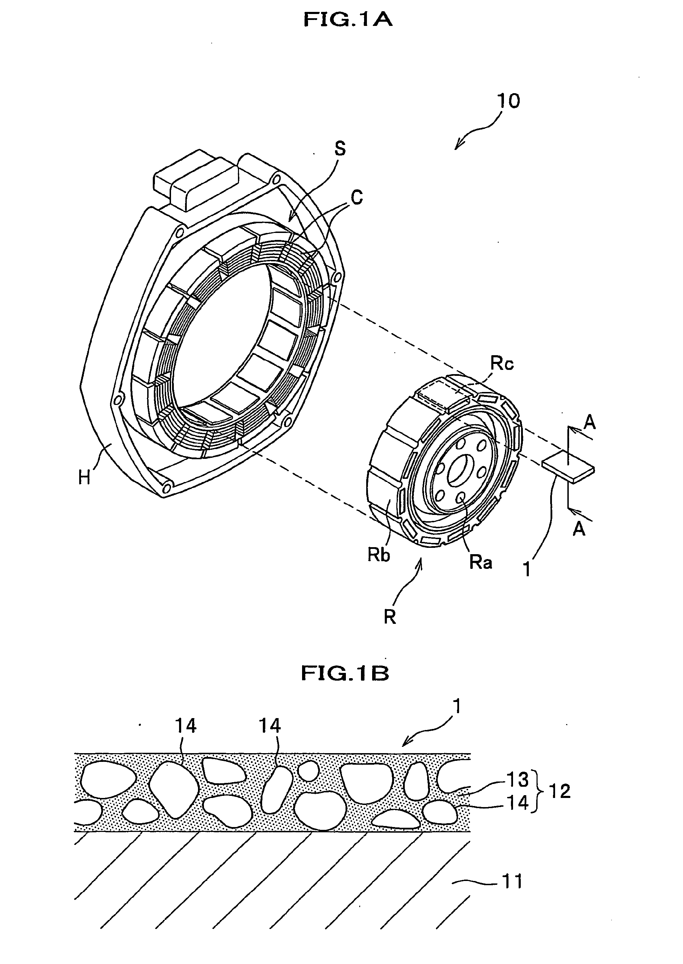

Fig. 1A is an exploded perspective view of an electric rotation motor in which motor permanent-magnets are built. Fig. 1B is a partial enlarged cross section view, taken along line A-A, of a surface part of the motor permanent-magnet shown in Fig. 1A.

Prior to describing motor permanent-magnet according to the embodiment, will be described a motor in which the motor permanent magnets are built.

As shown in Fig. 1A, the motor 10 according to the embodiment has generally a known structure, and includes a stator S disposed in a motor housing H and a rotor R disposed inside the stator S.

The rotor R is mainly include a rotor shaft Ra, an annular rotor yoke Rb mounted on an outer circumferential surface of the rotor shaft Ra; a plurality of motor permanent-magnets 1 (hereinafter, may be simply referred to as "magnet 1") disposed in a plurality of slots Rc formed along a circumferential direction of the rotor yoke Rb and an end plate (not shown) closing openings of the slots Rc.

In this motor 10, as well known, a high frequency AC magnetic field generated by a coil C of the stator S is applied to the magnets 1, so that the rotor R rotates.

Next, will be described the magnet 1 according to the embodiment.

As shown in Fig. 1B, the magnet 1 includes a coating film 12 on a surface of a magnet matrix 11.

The coating film 12 includes magnetic phases 14 made of a magnetic powder dispersed in an electrically nonconductive matrix 13 (hereinafter, may be simply referred to as a "matrix 13"), and is formed by coating a composition for forming the coating film (mentioned later) on a surface of the magnet matrix 11 and drying the coating film.

A thickness of the coating film 12 is preferably equal to or greater than 50 $\mu$m and equal to or smaller than 120 $\mu$m. More preferably, the thickness is equal to or smaller than 100 $\mu$m.

In addition, in the magnet 1 according to the embodiment, the coating film 12 is formed on all surfaces (six surfaces) of the magnet matrix 11 in a rectangular plate.

There is no limitation in selection of material for the matrix 13 only if it is formed with an electrically nonconductive material. For example, ceramics, resin materials are usable. In addition, the matrix 13 comprising ceramics is preferable because the ceramics increases a strength (stiffness) of the coating film 12 and is superior in heat resistance and corrosion resistance or the like. Particularly, a ceramics produced by a sol-gel method mentioned later is preferable because the ceramics has a superior adhesion with surfaces of the magnet matrix 11 mentioned later and surfaces of the magnetic powder forming the magnet phases 14. Hereinbelow will be more specifically described the matrix 13 comprising the ceramics.

The matrix 13 comprising the ceramics is configured to include metallic oxide. There is no special limitation in selection of the metallic oxide only if it is the metallic oxide. For example, the metallic oxide is represented by a formula (1) and preferably produced by the sol-gel method mentioned above.

$$MO_m \qquad (1)$$

where M represents Si (silicon), Ti (titanium), Zr (zirconium), Ge (germanium), Al (aluminum), Sn (tin), or Sb (antimony), and m is 2 when M is Si, Ti, Zr, Ge and 2/3 when M is Al or Sb.

Among these metallic oxides, $SiO_2$ and $Al_2O_3$ are more preferable.

There is no special limitation in selection of the magnetic powder forming the magnetic phase 14. For example, an iron powder, a Fe-Al-Si alloy (sendust) powder, a Fe-Si alloy (iron silicide) powder, a Fe-Ni alloy (permalloy) powder, a Fe-Ni-Mo alloy (super permalloy) powder, a nitriding iron powder, an iron aluminum alloy powder, an iron-cobalt alloy powder, a ferro-phosphorous powder, and the like are usable. Among them, the Fe-Al-Si alloy (sendust) powder is most preferable.

A particle diameter of the magnetic powder is preferably equal to or greater than 3 $\mu$m or equal to or smaller than 70 $\mu$m. A content rate of the magnetic powder in the coating film 12 is determined by an area ratio of the magnetic powder (magnetic phase 14) in a cross section of the coating film 12, which is preferably equal to or greater than 12.5% and equal to or smaller than 36.6% and more preferably equal to or greater than 12.5% and equal to or smaller than 30.5% in the area ratio.

There is no special limitation in selection of the magnet matrix 11. However, when a metallic magnet, which has a low electric resistance and tends to easily generate an eddy current loss, is used, a more outstanding advantageous effect of the present invention can be expected. As the metallic magnet, for example, alnico magnets and rare earth magnets, such as samarium-cobalt magnets and Neodymium magnets, are usable.

Next will be described operation of the magnet 1 according to the embodiment.

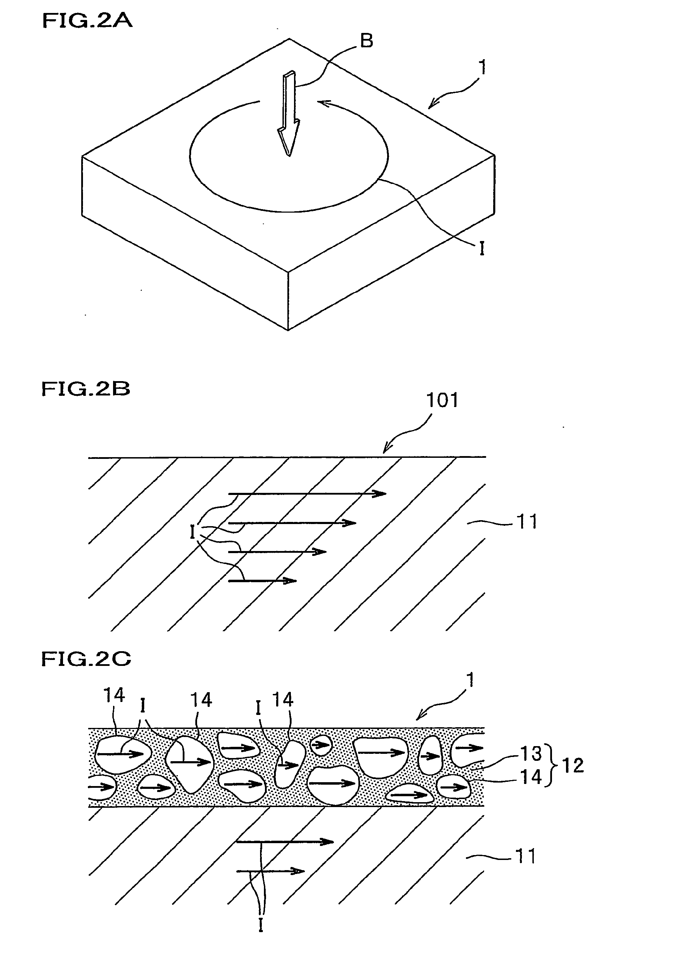

Fig. 2A is a perspective view of the motor permanent-magnet according to the embodiment to schematically show a state where an eddy current is generated in the motor permanent-magnet 1 and a direction of a magnetic flux density caused by an AC magnetic field is from a stator side to a rotor side. Fig. 2B is a partial enlarged cross section view of the motor permanent-magnet according to a comparative example to shown a state where eddy currents are generated. Fig. 2C is a partial enlarged cross section view of the motor permanent-magnet according to the embodiment to show a state where eddy currents are generated.

As shown in Fig. 2A, for example, when a magnetic flux density B of an AC magnetic field is formed from the side of the stator S (see Fig. 1A) to the side of the rotor R (see Fig. 1A), an eddy current I is generated around the magnetic flux density B (an axis of a magnetic line of force). In addition, when the magnetic flux density B is formed in a direction from the side of the rotor R to the side of the stator S, an eddy current I is generated in an opposite rotational direction to the eddy current shown in Fig. 2A.

First, will be described the eddy current generated in a motor permanent-magnet in a comparative example prior to description of the eddy current generated in the magnet 1 according to the embodiment.

As shown in Fig. 2B, the motor permanent-magnet 101 in the comparative example does not include the coating film 12 (see Fig. 2C) on the surface of the magnet matrix 11 unlike the magnet 1 according to the embodiment (see Fig. 2C). In the motor permanent-magnet 101, the closer to a surface the eddy currents I are, the greater in magnitude than eddy currents inside the magnet the eddy currents become.

On the other hand, as shown in Fig. 2C, the magnet 1 according to the embodiment has the coating film 12 near the surface where the eddy current I tends to flow with a greater magnitude. Accordingly the eddy current I is cut off by the electric nonconductive matrix 13 intervening between magnetic phases 14 and dispersed and the dispersed small eddy currents flow in respective magnetic phases 14. In other words, in the magnet 1 according to the embodiment, the coating film 12 suppresses a magnitude of the eddy current which originally become greater near the surface to have a small magnitude.

Further, unlike a conventional motor permanent-magnet (see, for example, Patent Document 1) including a high resistive material (for example, boron oxide) dispersed up to inside thereof, because the inside of the magnet 1 where the eddy current is originally small is formed with the magnet matrix 11 which does not include such a high resistive material. This prevents a ratio of the magnetic phase therein from decreasing and thus prevents the magnetic properties from being degraded.

Accordingly, the magnet 1 according to the embodiment can prevent the magnetic properties from degrading as well as efficiently suppress generation of the eddy currents I, and thus prevent decrease in efficiency of the motor 10. In addition, as a quantity of heat generated in the magnet can be decreased by suppressing generation of the eddy current I, when the magnet matrix 11 is formed with a neodymium magnet, thermal demagnetization of the magnet 1 can be prevented.

Will be described a method of producing the magnet 1 according to the embodiment.
The magnet 1 is produced by coating the composition for forming the film on a surface of the magnet matrix 11 and drying the composition.
The composition for forming the coating film includes sol-gel material of metallic oxide and the magnetic powder.

The sol-gel material includes hydlized polycondensate of metallic compound given by formula (2).

$$MX_n \qquad (2)$$

where M is the same as M in the formula (1), X represents an alkoxy group or a halogen atom, when M is Si, Ti, Zr, Ge, or Sn, n is 4, and when M is Al or Sb, n is 3. As the alkoxy group, those having a carbon number of from one to three are preferable. As the halogen atom, fluorine, chlorine, and bromine are preferable. Further, as the metallic compound shown in the formula (2), for example, there are tetra-ethoxysilane, tetra-methoxysilane, tetra-bromosilane, tetra-n-butoxysilane, titanium ethoxide, titanium methoxide, titanium n-propoxide, titanium n-nonyloxide, titanium isosteary isopropoxide, zirconium ethoxide, zirconium methoxide, zirconium isopropoxide, zirconium 2-methyl-2-butoxide, aluminum (III) s-butoxide, aluminum(III) t-butoxide, aluminum(III) ethoxide, aluminum(III) s-isopropoxide, tetra-ethoxygermane, tetra-methoxygermane, tetra-isopropoxygermane, tetra-butoxygermane, tetra-ethoxy tin, tetra-methoxy tin, tetra-isopropoxy tin, tetra-butoxy tin, antimony(III) n-butoxide, antimony(III) methoxide, antimony(III) ethoxide, and antimony(III) s-isopropoxide.

The sol-gel material can be prepared by mixing the metallic compounds represented by the formula (2), water necessary for hydrolysis, a catalyst, a solvent for controlling a viscosity, as required, and steering at room temperature or with heating, as required.
As the catalyst, acid catalysts are preferable. For example, there are formic acid, acetic acid, tetra-fluoroacetic acid; propanoic acid, oxalic acid, hydrochloric acid, nitric acid, and sulfuric acid.
As the solvent, for example, there are alcohols, cycloaliphatics hydrocarbons, aromatic hydrocarbons, esters, ketons, and ethers.

The composition for forming the coating film can be prepared by mixing the sol-gel material with the magnetic powder.
The magnetic powder is similar to the above-mentioned magnetic powder for forming the magnetic phases 14. It is preferably set that a content rate of the magnetic powder in the composition for forming the coating film is equal to or greater than 12.5% and equal to or smaller than 36.6% in the area ratio when the composition for forming the film is coated and dried on a surface of the magnet matrix 11. For example, the coating film 12 including the magnetic powder at the area ratio of 12.5% can be formed by coating the composition for forming the film including the magnetic powder at a content rate of 30 mass% and drying the coated composition. Further, the coating film 12 including the magnetic powder at the area ratio of 36.6% can be formed by coating the composition for forming the film including the magnetic powder at a content rate of 70 mass% and drying the coated composition. Further, to make the area ratio equal to or smaller than 30.5% the composition for forming the film including the magnetic powder with a content rate of 60 mass% are coated and dried the coated composition.

Next, according to the producing method the magnet 1 can be formed by coating the composition for forming the film on the surface of the magnet matrix 11 and drying the coated composition. A dried thickness of the composition for forming the film is preferably 50 to 120 $\mu$m and more preferably equal to or smaller than 100 $\mu$m.
Drying the composition for forming the coating film is performed at room temperature or under heating. The producing method may be carried out in the coating and drying processes by proceeding the hydlized polycondensate reaction of the metallic compound represented by the formula (2) in the sol-gel material.

[EXAMPLE]

Next, will be described an example of which operation and an advantageous effect of the motor permanent-magnet according to the present invention have been confirmed.

[First Example]

In the first example, first, as the magnet matrix, an Nd-Fe-B system permanent magnet having a grade of 302 kJ/m$^3$ (38MGOe) (with dimensions of 36.1 mm x 32 mm x 4.5 mm manufactured by Hitachi Metals, Ltd.) was prepared. Prior to use the magnet matrix, the magnet matrix was subjected to removal of an oxide film and then cleaning with acetone. On the other hand, the composition for forming the coating film was prepared to be coated on the surface of the magnet matrix. The composition for forming the coating film was prepared by mixing a sol-gel material including SiO2 which is hydrolytic polycondensation of tetra-ethoxysilane with a sendust powder (with average particle diameter of 10 $\mu$m, Fe-Al-Si alloy powder manufactured by KOBE STEEL., LTD.). In addition, a content rate of the sendust powder in the composition for forming the coating film was controlled to be 70 mass%.
Next, the composition for forming the coating film was coated on the surface of the magnet matrix with a thickness of 100 $\mu$m when measured after drying. Next, the magnet was produced by drying the coated composition for forming the coating film at 180°C. The content rate of the magnetic powder in the coating film formed on the surface of the magnet matrix was 36.6% in the area ratio mentioned above.

<First Comparative Example>

In the first comparative example, the magnet was produced similarly to the magnet according to the first example and the first comparative example except that a chemical plating film is formed instead of the coating film on the magnet according to the first example.

<Exothermic Temperature and Energy Loss Decrease in Magnet>

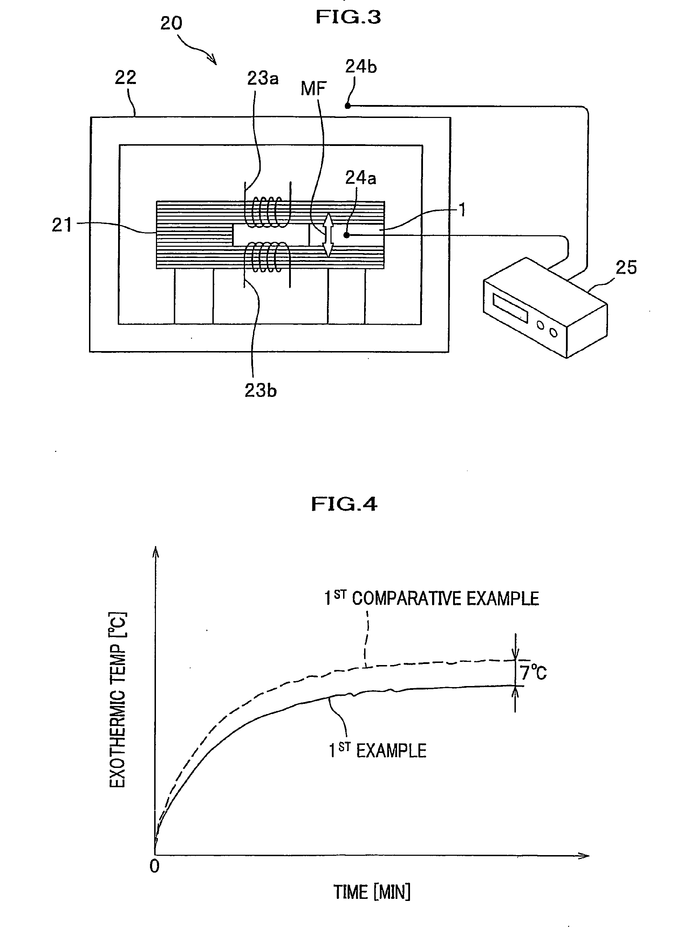

Next, exothermic temperatures in the magnets produced in the first example and the first comparative example were calculated and an energy loss decrease quantity of the magnet produced by the first example from the magnets produced by the first comparative example was calculated.
To measure the exothermic temperature of the magnet, a measuring unit using a thermocouple was used. Fig. 3 is an illustration of the measuring unit for measuring an exothermic temperature of the permanent magnet. As shown in Fig. 3, the unit 20 mainly includes an electrical steel jig 21 having a substantially U-shape on a cross section showing a state where the jig pinches the magnet 1 in a thickness direction; an thermal insulating container 22 for containing the electric steel jig 21; a primary coil 23a (50 turns) wound on the electric steel jig 21 to apply an AC magnetic filed MF in the thickness direction of the magnet 1 and a secondary coil 23b (20 turns); a first thermocouple 24a for detecting the temperature of the magnet 1; a second thermocouple 24b for detecting a temperature (room temperature) outside the insulating container 22; and a temperature measuring unit 25 connected to the first thermocouple 24a and the second thermocouple 24b. In the unit 20, the temperature measuring unit 25 measures the exothermic temperature of the magnet 1 from a difference between the temperature of the magnet 1 detected by the first thermocouple 24a and the room temperature detected by the second thermocouple 24b. A magnetic flux density of the AC magnetic field was 300 mT and a frequency was 1000 Hz.
Fig. 4 shows measurement results of the exothermic temperature in the magnet produced in the first example and the first comparative example. Fig. 4 is a chart showing variation in temperature of the permanent magnet of a first example, an axis of abscissa representing measuring time [min] and an axis of coordinate representing the exothermic temperature [°C] of permanent magnet.
As shown in Fig. 4, it was confirmed that the exothermic temperature of the magnet produced in the first example of decreased from the exothermic temperature in the magnet produced by the first comparative example by 7 °C in a state where the exothermic temperatures in the first example and the first comparative example substantially reach equilibrium.
Next, the energy loss decrease $\Delta$Pc in the magnet produced by the first example with reference to the magnets produced by the first comparative example is calculated on the basis of the following Equation (3).

$$\Delta Pc = (Pe2 + Ph2) - (Pe1 + Ph1) \quad \cdots (3)$$

where Pe1 is the eddy current loss in the magnet of the first example, Ph1 is a hysteresis loss in the magnet of the first example, Pe2 is an eddy current loss in the magnet of the first comparative example, Ph2 is a hysteresis loss in the magnet of the first comparative example. These Pe1, Ph1, Pe2, and Ph2 were measured by a B-H analyzer.
The energy loss decrease quantity $\Delta$Pc in the magnet produced in the first example was 0.021 W.

Further, it was confirmed through calculation that the temperature of the magnet is 180 °C when the magnets produced in the first comparative example are used as the permanent magnets in a motor (rotor) and that the temperature of the magnet is 138 °C when the magnet produced in the first example are used as the permanent magnets in a motor (rotor). More specifically, it was confirmed that the temperature of the magnets in an actual motor is decreased by 42 °C by using the magnets in the first example instead of the magnets in the first comparative example.

<Second Example>

In the second example, a magnet was produced similarly to the first example except that an Fe-6Si alloy powder (with an average particle diameter of 10 $\mu$m) was used instead of the sendust powder as the magnetic powder. Similar to the first example, the energy loss decrease quantity $\Delta$Pc was calculated. $\Delta$Pc is 0.016 W.
Further, it was confirmed that the temperature of the magnet in an actual motor decreased by 39 °C by using the magnet in the first example instead of the magnet in the comparative example.

<Third Example>

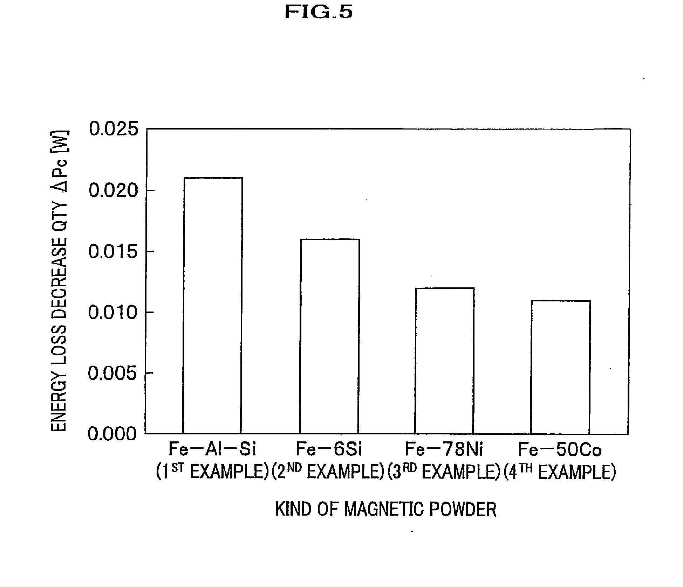

In the third example, a magnet was produced similarly to the first example except that a Fe-78Ni alloy powder (with an average particle diameter of 10 $\mu$m) was used instead of the sendust powder as the magnetic powder. Similar to the first example, the energy loss decrease quantity $\Delta$Pc was calculated. Fig. 5 shows the result. Fig. 5 is a chart showing energy loss decrease quantities $\Delta$Pc of the permanent magnets, an axis abscissa representing kinds of magnetic powder, an axis of coordinate representing energy loss decrease quantity $\Delta$Pc [W] .

<Fourth Example>

In a fourth example, a magnet was produced similarly to the first example except that a Fe-50Co alloy powder (with an average particle diameter of 10 $\mu$m) was used instead of the sendust powder as the magnetic powder. Similar to the first example, the energy loss decrease quantity $\Delta$Pc was calculated. Fig. 5 is a chart showing the results.

<Estimation of Magnets in First to Fourth Examples>

As shown in Fig. 5, it was confirmed that the energy loss decrease quantity $\Delta$Pc is over 0.010W in the magnets according to the first to fourth examples irrespective of the kinds of the magnetic powders contained in the coating film. Particularly, it was found that the magnet in which the magnetic powder is the Fe-Al-Si alloy powder (sendust powder) shows the greatest energy loss decrease quantity $\Delta$Pc.

<Fifth Example>

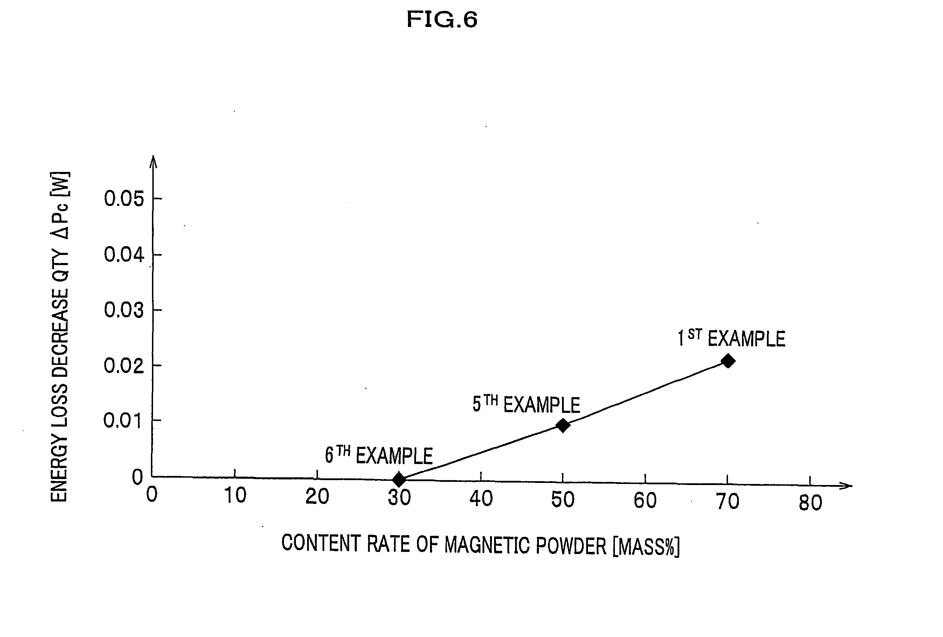

In the fifth example, a magnet was produced similarly to the first example except that the content rate of the magnetic powder in the composition for forming the coating film was changed from 70 mass% to 50 mass %, and the energy loss decrease quantity $\Delta$Pc was calculated. The content rate of the magnetic powder for the coating film was 24. 5% in the area ratio mentioned above. Fig. 6 shows the calculated energy loss decrease rate $\Delta$Pc.
Fig. 6 is a chart showing a relation between a content rate of the magnetic powder and the energy loss decrease quantity $\Delta$Pc in compositions forming the coating film, an axis of abscissa representing a content rate of the magnetic powder [mass %], an axis of coordinate representing energy loss decrease quantity $\Delta$Pc [W].

<Sixth Example>

In the sixth example, a magnet was produced similarly to the first example except that the content rate of the magnetic powder in the composition for forming the coating film was changed from 70 mass% to 30 mass %, and the energy loss decrease quantity $\Delta$Pc was calculated. The content rate of the magnetic powder for the coating film was 12.5 % in the area ratio mentioned above. Fig. 6 shows the obtained energy loss decrease quantity $\Delta$Pc.

<Second Comparative Example>

In the second comparative example, it was tried to produce the magnet similarly to the first example with change of the content rate of the magnetic powder in the composition for forming the coating film from 70 mass % to 80 mass%. However, the coating film, in which the magnetic phases were dispersed, could not be formed because of too much magnetic powder.

<Estimation of Magnets in First, Fifth, and Sixth Examples and Second Comparative Example>

As shown in Fig. 6, it was confirmed that the energy loss decrease quantity $\Delta$Pc of the magnet (sixth example) having the coating film of which content rate of the magnetic powder mentioned above was 30 mass% in the composition for forming the coating film, i.e., the magnet (sixth example) having the coating film of which area ratio of the magnetic powder is 12.5%, is near 0W and the smallest. Further, it was confirmed that the energy loss decrease quantity $\Delta$Pc of the magnet (first example) having the coating film of which content rate of the magnetic powder mentioned above is 70 mass% in the composition for forming the coating film, i.e., the magnet (first example) having the coating film of which area ratio of the magnetic powder is 36. 6%, is the greatest. Further, because when the content rate of the magnetic powder was 80 mass% (second comparative example), it was not able to form the coating film on the magnet, it was preferable that the content rate of the magnetic powder for the coating film is equal to or greater than 12.5% and equal to or smaller than 36.6% in the area ratio (equal to or greater than 30 mass% and equal to smaller than 70 mass% in the content rate of the magnetic powder in the composition for forming the coating film).

<Seventh Example>

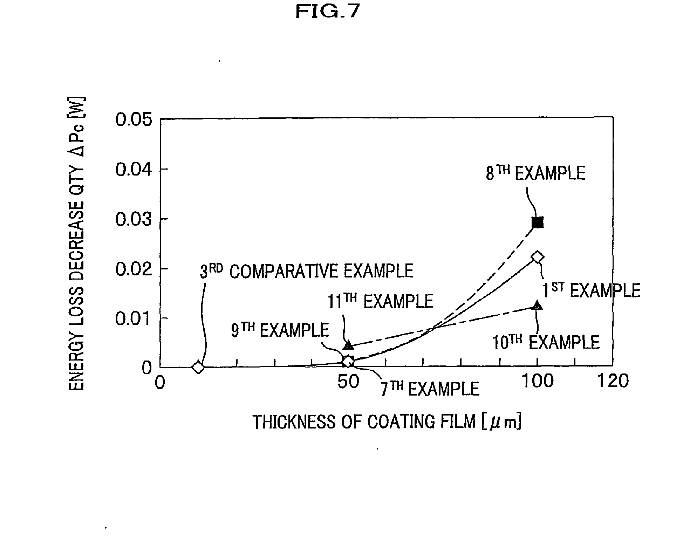

In the seventh example, a magnet was produced similarly to the first example except that a thickness of the coating film (average thickness) was changed from 100 $\mu$m to 50 $\mu$m, and the energy loss decrease quantity $\Delta$Pc was obtained. Fig. 7 shows the results. Fig. 7 is a chart showing a relation between a thickness of the coating films and the energy loss decrease quantities $\Delta$Pc, an axis of abscissa repressing a thickness [$\mu$m] of the coating film and an axis of coordinate representing energy loss decrease quantity $\Delta$Pc [W].

<Third Comparative Example>

In the third comparative example, the magnet was not coated with coating film on the magnet matrix used in the first example as it was.
Next, a magnet was produced similar to the first example and the energy loss decrease quantity $\Delta$Pc was obtained. Fig. 7 shows the result.

<Eighth Example>

In the eighth example, a magnet was produced similarly to the first example except that the particle diameter of the used magnetic powder was changed from 10 $\mu$m to 5 $\mu$m, and the energy loss decrease quantity $\Delta$Pc was obtained. Fig. 7 shows the result.

<Ninth Example>

In the ninth example, a magnet was produced similarly to the seventh example except that the particle diameter of the used magnetic powder was changed from 10 $\mu$m to 5 $\mu$m, and the energy loss decrease quantity $\Delta$Pc was obtained. Fig. 7 shows the result.

<Tenth Example>

In the tenth example, a magnet was produced similarly to the first example except that the particle diameter of the used magnetic powder was changed from 10 $\mu$m to 30 $\mu$m, and the energy loss decrease quantity $\Delta$Pc was obtained. Fig. 7 shows the result.

<Eleventh Example>

In the eleventh example, a magnet was produced similarly to the seventh example except that the particle diameter of the used magnetic powder was changed from 10 $\mu$m to 30 $\mu$m, and the energy loss decrease quantity $\Delta$Pc was obtained. Fig. 7 shows the result.

<Estimation of Magnets in First, Seventh to Eleventh Examples and Third Comparative Example>

As shown by the solid line in Fig. 7, a curve of the energy loss decrease quantity $\Delta$Pc has a flexion point at the thickness of the coating film of 50 $\mu$m (seventh example), and thus it was confirmed that the thickness of the coating film of the magnet was preferably equal to or greater than 50 $\mu$m. In addition, because the composition for forming the coating film on the magnet matrix once coated is approximately 120 $\mu$m, if it is not assumed that the composition is coated plural times, it was confirmed that the thickness of the coating film is preferably equal to or smaller than 120 $\mu$m. Further, as clearly shown by comparison among a broken line (particle diameter of the magnetic powder: 5 $\mu$m), a solid line (particle diameter of the magnetic powder: 10 $\mu$m), and a dashed line (particle diameter of the magnetic powder: 30 $\mu$m) in Fig. 7, it was found that if the thickness of the coating film exceeds 70 $\mu$m, the smaller the particle diameter is, the greater the energy loss decrease quantity $\Delta$Pc becomes. On the other hand, when the particle diameter is too small, a manufacturing cost of the magnetic powder increases due to classifying. Accordingly, in consideration of balance between the energy loss decrease quantity $\Delta$Pc and the manufacturing cost, it was confirmed that the particle diameter of about 10 $\mu$m is most preferable.

**Claims**

1. A permanent-magnet to be built into a motor (10), the permanent magnet (1) comprising a magnet matrix (11) and a coating film (12) on a surface of the magnet matrix (11), wherein magnetic phases (14) made of a magnetic powder are dispersed in an electrical nonconductive matrix (13) of the coating film (12),
**characterized in that**
a content rate of the magnetic powder in the coating film (12) is determined by a ratio of a cross-sectional area of the magnetic powder over a total cross-sectional area of the coating film (12) is from equal to or greater than 12.5% to equal to or smaller than 36.6%.

2. The permanent-magnet as claimed in claim 1, wherein the coating film (12) has a thickness equal to or greater than 50 $\mu$m.

**Patentansprüche**

1. In einen Motor (10) einzubauender Permanentmagnet, wobei der Permanentmagnet (1) eine Magnetmatrix (11) und einen Beschichtungsfilm (12) auf einer Oberfläche der Magnetmatrix (11) aufweist, worin aus magentischem Pulver hergestellte magnetische Phasen (14) in einer elektrisch nicht leitfähigen Matrix (13) des Beschichtungsfilms (12) verteilt sind,
**dadurch gekennzeichnet, dass**
eine Anteilrate des magnetischen Pulvers in dem Beschichtungsfilm (12), die durch ein Verhältnis einer Querschnittsfläche des magnetischen Pulvers zu einer Gesamtquerschnittsfläche des Beschichtungsfilms (12) bestimmt wird, von gleich oder größer als 12,5% bis gleich oder kleiner als 36,6% ist.

2. Der Permanentmagnet nach Anspruch 1, worin der Beschichtungsfilm (12) eine Dicke gleich oder größer als 50 $\mu$m hat.

**Revendications**

1. Aimant permanent à intégrer dans un moteur (10), l'aimant permanent (1) comprenant une matrice d'aimant (11) et un film de revêtement (12) sur une surface de la matrice d'aimant (11), dans lequel des phases magnétiques (14) constituées d'une poudre magnétique sont dispersées dans une matrice non électriquement conductrice (13) du film de revêtement (12), **caractérisé en ce qu'**un niveau de contenu de la poudre magnétique dans le film de revêtement (12) est déterminé par un rapport d'une surface de section transversale de la poudre magnétique à une surface de section transversale totale du film de revêtement (12) qui est compris entre supérieur ou égal à 12,5 % et inférieur ou égal à 36,6 %.

2. Aimant permanent selon la revendication 1, dans lequel le film de revêtement (12) présente une épaisseur qui est supérieure ou égale à 50 $\mu$m.

# FIG.1A

# FIG.1B

**FIG.2A**

**FIG.2B**

**FIG.2C**

## FIG.3

## FIG.4

FIG.5

ENERGY LOSS DECREASE QTY $\Delta Pc$ [W]

0.025
0.020
0.015
0.010
0.005
0.000

Fe−Al−Si    Fe−6Si    Fe−78Ni    Fe−50Co
(1ST EXAMPLE) (2ND EXAMPLE) (3RD EXAMPLE) (4TH EXAMPLE)

KIND OF MAGNETIC POWDER

FIG.6

# FIG.7

Graph with y-axis labeled "ENERGY LOSS DECREASE QTY ΔPc [W]" (values 0, 0.01, 0.02, 0.03, 0.04, 0.05) and x-axis labeled "THICKNESS OF COATING FILM [$\mu$m]" (values 0, 50, 100, 120). Data points labeled: 3RD COMPARATIVE EXAMPLE, 9TH EXAMPLE, 11TH EXAMPLE, 7TH EXAMPLE, 8TH EXAMPLE, 1ST EXAMPLE, 10TH EXAMPLE.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 574033 A

- JP 2002064010 A